# EUROPÄISCHE PATENTSCHRIFT

(11) **EP 0 577 916 B1**
(45) Veröffentlichungstag und Bekanntmachung des Hinweises auf die Patenterteilung: **15.11.1995**
(21) Anmeldenummer: 93100760.3
(22) Anmeldetag: 20.01.1993
(51) Int. Cl.: F16F 13/00

(54) **Hydraulisch dämpfendes Gummilager**
Hydraulically-damped elastomeric support
Support élastique à amortissement hydraulique

(30) Priorität: 09.07.1992 DE 4222486
(43) Veröffentlichungstag der Anmeldung: 12.01.1994
(73) Patentinhaber: Firma Carl Freudenberg, 69469 Weinheim (DE)
(72) Erfinder: Rudolph, Axel, W-6140 Bensheim (DE)

(56) Entgegenhaltungen:
- EP-A- 0 057 774
- EP-A- 0 452 169
- JP-A- 2 138 532
- JP-A-62 292 941
- JP-A-63 214 531
- Patent Abstracts of Japan vol. 13, no. 373(M-861)(3721) 18.August 1989 & JP-A-01 126 452 (KINUGAWA RUBBER) 18. Mai 1989
- Patent Abstracts of Japan vol. 10, no. 10 (M-446)(2067) 16. Jan. 1986 & JP-A-60 172 743(KINUGAWA GOMU KOGYO K.K.) 6. Sept. 1985

## Beschreibung

Die Erfindung betrifft ein hydraulisch dämpfendes Gummilager, umfassend einen inneren Stützkörper und einen den inneren Stützkörper mit radialem Abstand umschließenden äußeren Stützkörper, die durch ein Federelement aus gummielastischem Werkstoff aufeinander abgestützt sind und zumindest drei mit Dämpfungsflüssigkeit gefüllte Kammern begrenzen, die zumindest teilweise durch gummielastische Blähwände begrenzt sind, wobei zumindest die erste und die zweite Kammer durch eine Verbindungsöffnung flüssigkeitsleitend miteinander verbunden sind, wobei die dritte Kammer durch membranartige Blähwände von der ersten und zweiten Kammer getrennt ist und wobei die dritte Kammer derart zwischen der ersten und zweiten Kammer angeordnet ist, daß sie den inneren Stützkörper zumindest teilweise umschließt.

Ein solches Lager ist aus der JP-A-62 292 941 bekannt. Das Gummilager umfaßt drei Kammern, wobei zwei der Kammern und eine Teilkammer der dritten Kammer auf einer Seite der Lagerachse und die weitere Teilkammer der dritten Kammer auf der anderen Seite der Lagerachse angeordnet sind. Die drei Kammern sind Bestandteile eines separat erzeugten Körpers, der in radialer Richtung zwischen dem inneren und dem äußeren Stützkörper angeordnet ist.

Aus der EP 0 452 169 A1 ist ein Gummilager bekannt, das als Mehrkammerlager ausgebildet ist, wobei die Kammern durch Verbindungsöffnungen miteinander verbunden sind. Die Verbindungsöffnungen sind kanalartig ausgebildet. Das Federelement, das die beiden Stützkörper verbindet, begrenzt die mit Dämpfungsflüssigkeit gefüllten Kammern.

Ein weiteres Gummilager ist aus der JP 2-138532 A bekannt. Das Gummilager umfaßt drei Kammern, die durch eine T-förmige Verbindungsöffnung flüssigkeitsleitend miteinander verbunden sind. Die dritte Kammer ist gegenüber der ersten und der zweiten Kammer jeweils durch eine membranartige Blähwand begrenzt und durch einen Abzweig der Verbindungsöffnung hydraulisch mit diesen verbunden. Alle drei Kammern sind auf einer Seite der Lagerachse zwischen dem von dem Federelement umschlossenen inneren Stützkörper und dem äußeren Stützkörper angeordnet. Auf der dem inneren Stützkörper gegenüberliegenden Seite der Kammern ist ein zur Atmosphäre hin offener, luftgefüllter Hohlraum vorgesehen.

Aus der JP 63-214531 A ist eine hydraulisch dämpfende Hülsengummifeder bekannt, die bezogen auf eine gedachte Radialebene, die entsprechend der Richtung der eingeleiteten Schwingungen verläuft, symmetrisch ausgebildet ist. Die erste und die zweite Kammer sind auf einer Seite der Lagerachse zwischen dem inneren und dem äußeren Stützkörper spiegelbildlich zur Radialebene angeordnet, wobei die dritte Kammer auf der den beiden Kammern gegenüberliegenden Seite der Lagerachse vorgesehen ist und durch Dämpfungskanäle jeweils flüssigkeitsleitend mit der ersten und der zweiten Kammer verbunden ist.

Aus der EP 0 009 120 ist ein Buchsenlager bekannt, bei dem die Kammern der Kammerpaare durch Ausnehmungen des Federkörpers gebildet und herstellungsbedingt in radialer Richtung offen sind. Die Kammern werden verschlossen, indem der innere Stützkörper einschließlich des Federkörpers nach der Flüssigkeitsbefüllung der Kammern in ein flüssigkeitsundurchlässiges Außenrohr geschoben wird. Die Schwingungsdämpfung/-isolierung in mindestens zwei verschiedenen Frequenzbereichen ist mit dem vorbekannten Gummilager nicht möglich.

Der Erfindung liegt die Aufgabe zugrunde, ein Gummilager der eingangs genannten Art derart weiterzuentwickeln, daß sich eine Schwingungsdämpfung und/oder Schwingungsisolierung jeweils in mindestens zwei verschiedenen Frequenzbereichen ergibt.

Diese Aufgabe wird erfindungsgemäß bei einem Gummilager der eingangs genannten Art mit den kennzeichnenden Merkmalen von Anspruch 1 gelöst. Auf vorteilhafte Ausgestaltungen nehmen die Unteransprüche Bezug.

Das erfindungsgemäße Gummilager kann beispielsweise als Drehmomentstütze zur Abstützung einer Verbrennungskraftmaschine zur Anwendung gelangen und dämpft einerseits beispielsweise niederfrequente Schwingungen im Bereich von 5 Hz, die durch Lastwechsel hervorgerufen werden und bedingt andererseits eine gute Isolation leerlaufbedingter Schwingungen. Die Frequenz der leerlaufbedingten Schwingungen kann beispielsweise im Bereich von 28 Hz liegen. Die erste und die zweite Kammer, die flüssigkeitsleitend miteinander verbunden sind und die dritte Kammer in ihrem elastischen Bereich außenseitig zumindest teilweise umschließen, dämpfen niederfrequente Schwingungen und bewirken bei bestimmten, durch Auslegung festgelegten Frequenzen, eine Absenkung der dynamischen Federrate. Das Volumen der inneren dritten Kammer wird je nach Blähelastizität der Blähwände in Abhängigkeit von der zu dämpfenden, niederfrequenten Schwingung beeinflußt. Die Isolierung hochfrequenter Schwingungen erfolgt nur durch die Blähelastizität der Kammerwände.

Zur Funktion ist folgendes auszuführen:
Die radial innerhalb der ersten und zweiten Kammer angeordnete dritte Kammer wird, abgesehen von extremen Verformungen bei sehr großen Amplituden, nur hydraulisch angeregt und bewirkt eine höherfrequente Absenkung der dynamischen Federrate und die darauffolgende Dämpfung. Nach einem Überschreiten des Dämpfungsbereichs der ersten und der zweiten Kammer bei höheren Frequenzen, wird die Verbindungsöffnung von der Dämpfungsflüssigkeit nicht mehr durchströmt und nahezu das gesamte Volumen der äußeren Kammer höheren Druckes verdrängt das Volumen der inneren dritten Kammer im Rahmen des Freiweges zwischen der radialen, elastischen Begrenzungswand und dem inneren Stützkörper. Auf der Seite niedrigeren Drucks wird die dritte Kammer entsprechend aufgeweitet.

Besonders vorteilhaft ist die Ausgestaltung des Verbindungsbereichs zwischen den Teilen der dritten Kammer, die einerseits von der ersten Arbeitskammer und andererseits von der zweiten Arbeitskammer umschlossen sind, als Kanal. Aus dieser Ausgestaltung ergibt sich eine dritte Kammer, die eine erste und eine zweite Teilkammer umfaßt, die durch eine Verbindungsöffnung miteinander verbunden sind. In Abstimmung mit den Blähelastizitäten und der Geometrie der Verbindungsöffnung führt dies zu frequenzabhängigen, gegenphasigen Schwingungen der bewegten Flüssigkeitsanteile und so zu einer Absenkung der dynamischen Federrate. Die erste und die zweite Kammer sind, bezogen auf die gemeinsame Lagerachse einander gegenüberliegend angeordnet.

Die Blähwände der dritten Kammer können radial in die erste Kammer und/oder zweite Kammer hinreinragende Anschlagpuffer aufweisen, die bei Extremauslenkungen von inneren und äußeren Stützkörpern zueinander an den äußeren Stützkörper anlegbar sind. Hierbei ist von Vorteil, daß bei Extremauslenkungen der beiden Stützkörper zueinander die mechanischen Belastungen auf das Federelement reduziert werden können.

Im Hinblick auf eine einfache Herstellbarkeit des Gummilagers und die Vermeidung von Anschlaggeräuschen bei Extremauslenkungen der beiden Stützkörper zueinander, können die Blähwände und die Anschlagpuffer einstückig ineinander übergehend ausgebildet sein.

Die Anschlagpuffer können im Bereich ihrer Anschlagflächen, auf der dem äußeren Stützkörper zugewandten Seite, Vertiefungen aufweisen, die bei Anschlagberührung der Anschlagpuffer mit dem äußeren Stützkörper einen Hohlraum begrenzen. Die so erzielte Endlagendämpfung reduziert die mechanischen Belastungen und die eventuell entstehenden Anschlaggeräusche weiter.

Gemäß einer vorteilhaften Ausgestaltung ist es vorgesehen, daß die erste und die zweite Kammer jeweils in axialer Richtung beiderseits durch Blähwände begrenzt sind. Die Blähwände können eine übereinstimmende Ausbauchungselastizität aufweisen. Zur Erzielung eines voneinander abweichenden Betriebsverhaltens des Gummilagers bei Belastungen auf Zug und auf Druck können die Blähwände der ersten Kammer eine Gesamtausbauchungselastizität aufweisen, die von der Gesamtausbauchungselastizität der Blähwände der zweiten Kammer abweicht. Für manche Anwendungsfälle ist ein derartiges Betriebsverhalten von Vorteil.

Neben einer ausschließlichen Verbindung der ersten und der zweiten Kammer miteinander kann die dritte Kammer durch eine weitere Verbindungsöffnung mit einer der beiden sie umgebenden Kammern flüssigkeitsleitend verbunden sein. Hierbei ist von Vorteil, daß das Gummilager einfacher mit Dämpfungsflüssigkeit befüllbar ist, wodurch die Montage vereinfacht werden kann.

Die Blähwände der dritten Kammer können auf der dem inneren Stützkörper zugewandten Innenfläche eine Oberflächenprofilierung aufweisen. Eine Profilierung auf der entsprechenden Oberfläche des inneren Stützkörpers ist ebenfalls möglich. Die Freiwege, die zwischen dem inneren Stützkörper und der radialen Begrenzungswand der dritten Kammer vorgesehen sind, bedingen bei einem Anschlagen der Anschlagpuffer am äußeren Stützkörper eine Endlagendämpfung durch Flüssigkeitsverlagerung in sich selbst. Zusätzlich kann man über diese Freiwege die obere Grenze der zu isolierenden Amplituden nach oben begrenzen, da mit dem Anschlagen der Blähwände auf dem inneren Stützkörper die dynamische Federrate ansteigt. Beispielsweise besteht die Möglichkeit, die Freiwege durch ein Einlegeteil zu begrenzen, das in radialer Richtung zwischen dem elastisch nachgiebigen Bereich der dritten Kammer und dem unnachgiebigen Bereich des inneren Stützkörpers angeordnet ist. Die Flüssigkeitsverlagerung erfolgt bei in sich geschlossener dritter Kammer, wobei die Flüssigkeitsbestandteile in den Teilabschnitten höheren Druckes in die Teilabschnitte niedrigeren Druckes verlagert werden. Bei in sich geschlossener dritter Kammer besteht im Hinblick auf die verbesserte Abstimmung des hydraulisch dämpfenden Gummilagers auf die jeweiligen Gegebenheiten des Anwendungsfalles die Möglichkeit, Dämpfungsflüssigkeiten unterschiedlicher Viskosität zu verwenden. Ist beispielsweise eine Endlagendämpfung vorgesehen, kann die in sich geschlossene dritte Kammer mit einer vergleichsweisen zähen Dämpfungsflüssigkeit befüllt sein, während die Dämpfungsflüssigkeit der ersten und der zweiten Kammer vergleichsweise dünnflüssiger ausgeführt ist. Die Verbindung der ersten und der zweiten Teilkammer innerhalb der dritten Kammer kann beispielsweise in einen Deckel eingeformt sein, der das Gummilager zur Umgebung hin abdichtet. Bei einer Verbindung der dritten Kammer mit einer der beiden in radialer Richtung benachbarten Kammern weist die Dämpfungsflüssigkeit eine übereinstimmende Viskostität auf, da ein Flüssigkeitsaustausch zwischen sämtlichen Kammern stattfinden kann.

Hinsichtlich einer einfachen Befüllung des Gummilagers mit Dämpfungsflüssigkeit kann das Gummilager beispielsweise symmetrisch zu einer gedachten Radialebene ausgeführt sein. Hierbei ist von Vorteil, daß der innere Stützkörper und der den inneren Stützkörper adhäsiv umgebende Federkörper in axialer Richtung zweiteilig ausgeführt sind, wobei die inneren Stützkörper Teilabschnitte im Bereich ihrer axialen Berührungsflächen kraft- und/oder formschlüssig durch beispielsweise ein Verbindungselement miteinander verbunden sind. Das Verbindungselement kann beispielsweise durch einen Klemmring gebildet sein. Die inneren Stützkörperteilabschnitte weisen beispielsweise im Bereich der einander zugewandten, axialen Berührungsflächen Ausnehmungen auf, in die das Verbindungselement derart eingesetzt werden kann, daß sich eine durchgängig glatte Innenfläche eines beispielsweise rohrförmigen inneren Stützkörpers ergibt. Eine flüssigkeitsdichte Verbindung entlang der Trennebenen muß gewährleistet sein.

Nach einer anderen Ausgestaltung kann die dritte Kammer durch eine in axialer Richtung offene Ausnehmung des Federkörpers gebildet sein, die nach der Flüssigkeitsbefüllung des Gummilagers durch einen Deckel verschlossen wird. Der innere Stützkörper ist in diesem Beispiel dann durch ein Tragteil gebildet, das in axialer Richtung in die dritte Kammer hineinragt und nur axial einerseits von dem Federkörper umgeben ist.

Die Erfindung wird nachfolgend anhand der als Anlage beigefügten Zeichnungen weiter verdeutlicht. Es zeigen:
Figur 1 ein Ausführungsbeispiel eines Gummilagers der erfindungsgemäßen Art in längsgeschnittener Darstellung entlang des Schnitts B - B aus Figur 2.
Figur 2 das Buchsenlager nach Figur 1 in quergeschnittener Darstellung entlang des Schnittes A - A.
In Figur 3 ist ein weiteres Ausführungsbeispiel des erfindungsgemäßen Gummibuchse in längsgeschnittener Darstellung entlang der Linie C - C aus Figur 4 gezeigt, wobei die Buchse in axialer Richtung zweiteilig ausgeführt ist.
In Figur 4 ist das Gummilager aus Figur 3 in quergeschnittener Darstellung gezeigt. Der Schnittverlauf D - D ist aus Figur 3 zu entnehmen.
In Figur 5 ist beispielhaft eine Kennung gezeigt, die durch ein hydrualisch dämpfendes Gummilager gemäß der Figuren 1 bis 4 zu erzielen ist.

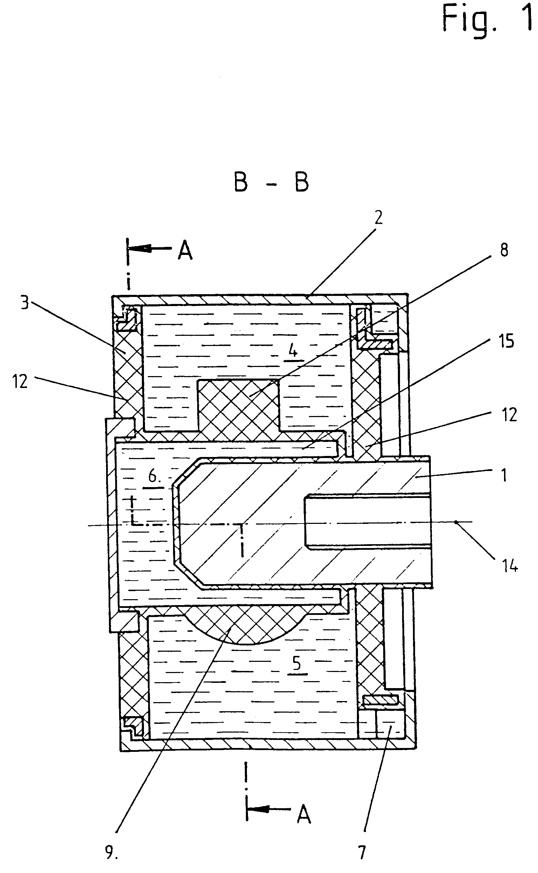

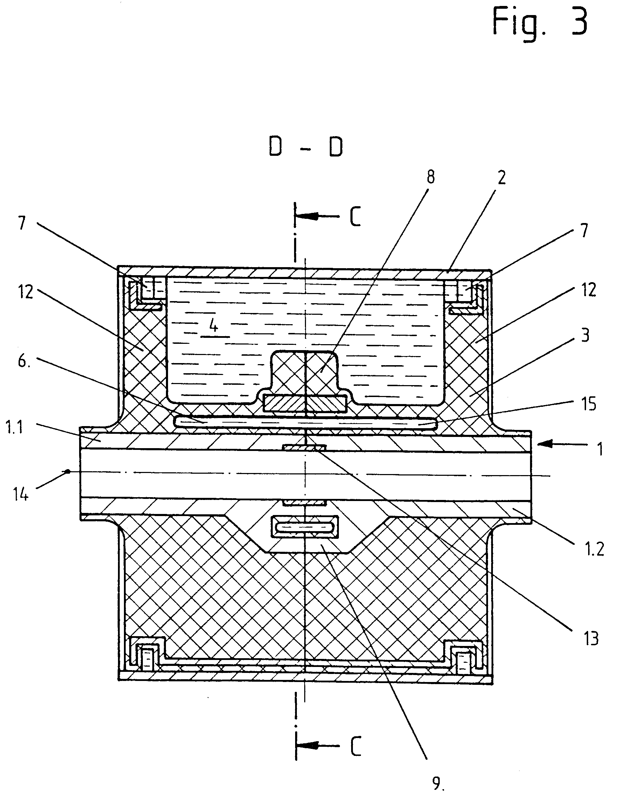

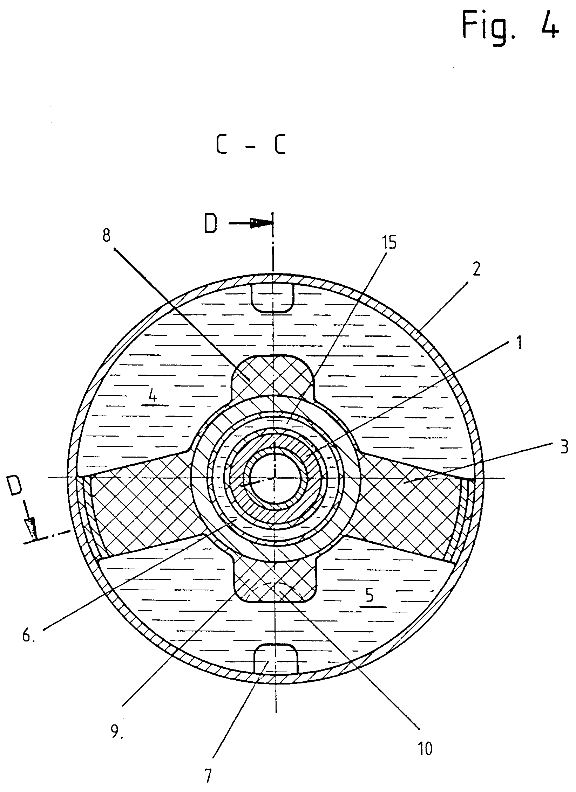

In den Figuren 1 bis 4 sind zwei Ausführungsbeispiele eines erfindungsgemäßen Gummilagers gezeigt, bei denen ein innerer 1 und ein äußerer Stützkörper 2 durch ein Federelement 3 aus gummielastischem Werkstoff aufeinander abgestützt sind. Das Gummilager umfaßt in beiden Ausführungsbeispielen drei Kammern 4, 5, 6, die mit Dämpfungsflüssigkeit gefüllt sind. Die erste Kammer 4 ist mit der zweiten Kammer 5 durch eine Verbindungsöffnung 7 in Form eines Drosselkanals flüssigkeitsleitend verbunden. In dem in Figur 3 und 4 dargestellten Ausführungsbeispiel ist die erste Kammer 4 mit der zweiten Kammer 5 durch zwei Verbindungsöffnungen 7 verbunden.

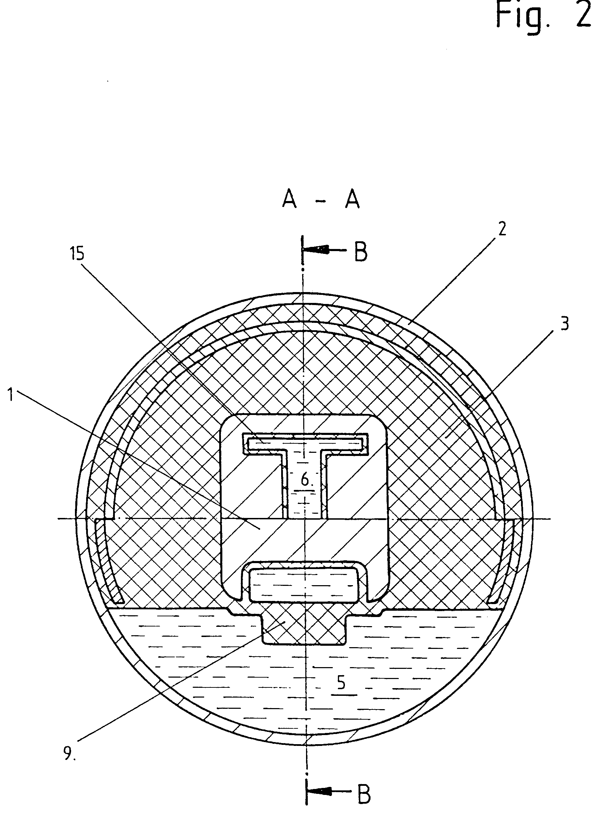

Die erste und die zweite Kammer, 4, 5 sind, bezogen auf eine gemeinsame Achse 14, im wesentlichen auf einander gegenüberliegenden Seiten angeordnet und umschließen die dritte Kammer 6 in radialer Richtung außenseitig in ihrem elastischen nachgiebigen Bereich. Die dritte Kammer 6 ist in Richtung der ersten und der zweiten Kammer 4, 5 durch elastisch nachgiebige, membranartig dünne Blähwände begrenzt, die sich nur in Umfangsrichtung erstrecken. Die axiale Begrenzung der dritten Kammer 6 kann im wesentlichen als unnachgiebig angesehen werden, wie dies aus den Figuren 1 und 3 hervorgeht. In Figur 1 ist die dritte Kammer 6 in axialer Richtung durch einen Deckel begrenzt, der die in axialer Richtung offene Ausnehmung des Federelements 3 stirnseitig verschließt In diesem Ausführungsbeispiel ist es vorgesehen, daß die dritte Kammer 6 mit der ersten und der zweiten Kammer 4, 5 nicht in flüssigkeitsleitender Verbindung steht. Nach einer anderen, hier nicht dargestellten Variante kann die dritte Kammer 6 im Bereich ihrer radialen, umfangsseitigen Begrenzung zumindest eine Durchbrechung aufweisen, die mit zumindest einer der beiden ersten und zweiten Kammern 4, 5 flüssigkeitsleitend in Verbindung steht. Die Freiwege 15, die den radialen Abstand zwischen der membranartig dünnen, elastisch nachgiebigen Blähwand der dritten Kammer 6 und dem inneren Stützkörper 1 beschreiben, können an die jeweiligen Gegebenheiten des Anwendungsfalles angepaßt sein. Die dritte Kammer 6 im Ausführungsbeispiel nach den Figuren 1 und 2 ist doppel-T-förmig gestaltet, während die dritte Kammer 6 in den Figuren 3 und 4 hohlzylindrisch gestaltet ist.

Die hydraulisch dämpfenden Gummilager dämpfen in mindestens zwei verschiedenen Frequenzbereichen niederfrequenter Schwingungen und weisen einen Frequenzbereich mit niedriger dynamischer Federrate auf. Der erste Frequenzbereich, in dem niederfrequente Schwingungen gedämpft werden, liegt beispielsweise bei 5 Hz. Ein typischer Anwendungsfall dafür ist beispielsweise eine Drehmomentstütze, um Lastwechselschläge einer Verbrennungskraftmaschine zu bedämpfen. Eine Dämpfung dieser Lastwechselschläge erfolgt durch die Verlagerung von Dämpfungsflüssigkeit zwischen der ersten und der zweiten Kammer 4, 5 durch die Verbindungsöffnung 7 und bei großen Schwingungsamplituden durch ein Anschlagen der Anschlagpuffer 8, 9 am äußeren Stützkörper 2. In diesem Falle verlagern sich Flüssigkeitsbestandteile der Dämpfungsflüssigkeit von dem Teilabschnitt höheren Druckes innerhalb der dritten Kammer 6 in Teilabschnitte niedrigeren Drucks.

Der zweite Frequenzbereich, in dem betriebsbedingt eingeleitete Schwingungen gedämpft werden können, ist in Richtung höherfrequent verschoben und wird durch Flüssigkeitsverlagerung innerhalb der dritten Kammer gedämpft. Extreme Auslenkbewegungen finden nicht statt, so daß die Anschlagpuffer 8, 9 nicht mit dem äußeren Stützkörper 2 in Berührung kommen.

Für eine gute Isolierung von höherfrequenten Schwingungen, beispielsweise Schwingungen, die im Leerlauf einer Verbrennungskraftmaschine auftreten und im Bereich von 28 Hz liegen, wird eine Schwingungsisolierung ausschließlich über die Nachgiebigkeit der die ersten und zweiten Kammern, 4, 5 begrenzenden Blähwände erreicht. Eine Flüssigkeitsverlagerung zwischen den Kammern 5 und 6 findet nicht statt.

Im Gegensatz zu der Ausführungsform nach den Figuren 1 und 2 ist das Gummilager aus den Figuren 3 und 4 in axialer Richtung zweiteilig ausgeführt. Die beiden Hälften des inneren Stützkörpers 1 sind adhäsiv mit dem zweiteilig ausgeführten Federkörper 3 verbunden. Das Gummilager setzt sich aus zwei gleichen Vulkanisationsteilen, einem Außenrohr und einem Verbindungselement zusammen, wobei das Verbindungselement 13 durch einen Klemmring gebildet ist, der die beiden inneren Stützkörperteilabschnitte 1.1, 1.2 in Verbindung mit dem einteiligen äußeren Stützkörper 2 in axialer Richtung zuverlässig aneinander festlegt. Aufgrund der einfachen, symmetrischen Form ist die Herstellung der zur Anwendung gelangenden Einzelteil gemäß der Figuren 3 und 4 in wirtschfaftlicher Hinsicht besonders vorteilhaft. Eine Abdichtung der dritten Kammer 6 gegenüber den Kammern 4, 5 kann beispielsweise durch Kleben erfolgen. Eine Verlagerung von innerem Stützkörper 1 zu äußerem Stützkörper 2, so daß nach dem Aufbringen der bestimmungsgemäß zu tragenden Last eine vorherbestimmte Arbeitsposition eingenommen wird, ist ebenfalls denkbar. Zur Erreichung unterschiedlicher Zug- und Druckstufen können die Blähwände der ersten und zweiten Kammer 4, 5 eine voneinander abweichende Ausbauchungselastizität aufweisen. Dies ist in manchen Anwendungfällen von Vorteil.

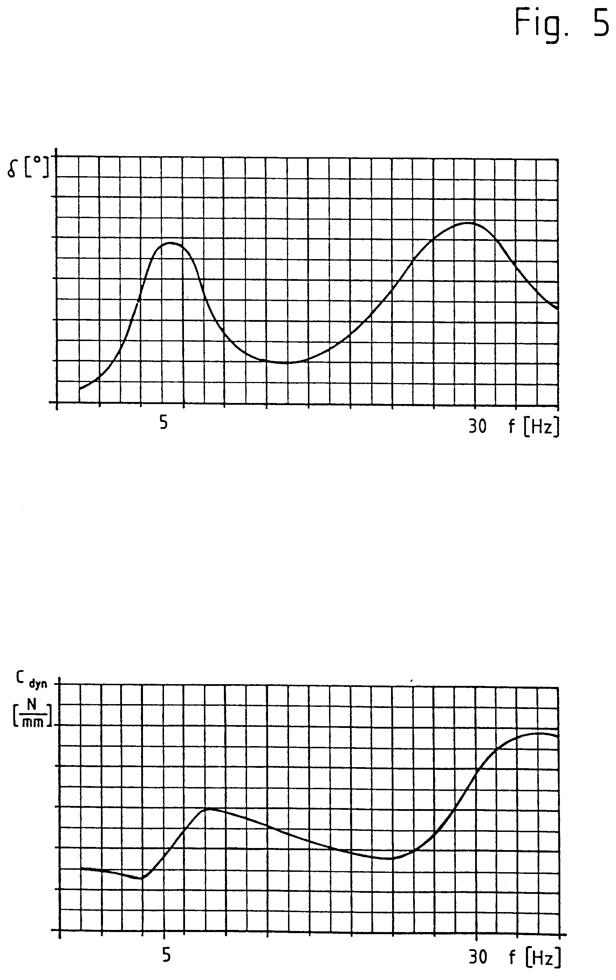

In Figur 5 ist die Kennung der Gummilager aus den Figuren 1 bis 4 dargestellt. Im oberen Teil der Figur ist der Dämpfungswinkel δ in ° über der Frequenz in Hz aufgetragen. Im unteren Teil der Darstellung ist die dynamische Federrate c_{dyn.}, in N/mm ebenfalls über der Frequenz in Hz aufgetragen. Es ist deutlich zu erkennen, daß ein erstes Dämpfungsmaximum im Bereich von 5 Hz und ein zweites Dämpfungsmaximum bei ca. 28 Hz vorliegt. Die Dämpfung der niederfrequenten Schwingung bei 5 Hz ist vorgesehen, um Lastwechselschläge zu bedämpfen. Die leerlaufbedingten Schwingungen im Bereich von 28 Hz werden durch das zweite Maximum isoliert.

Wie in der unteren Darstellung von Figur 5 zu erkennen ist, geht in diesem Beispiel das Dämpfungsmaximum jeweils mit einer Absenkung der dynamischen Federrate einher. Dies ist insbesondere von Vorteil, um die leerlaufbedingten Schwingungen mit möglichst großer Nachgiebigkeit zu isolieren.

Kennlinien, die von den hier dargestellten Kennlinien abweichen, lassen sich beispielsweise durch eine Änderung der Viskosität der Dämpfungsflüssigkeit erzielen. Auch abweichende Ausgestaltungen der Kammerwände, die Verwendung eines anderen Elastomers oder eine in ihrer geometrischen Gestalt abweichende Verbindungsöffnung beeinflussen die Kennung, wodurch das Gummilager dem jeweiligen Anwendungsfall angepaßt werden kann.

Das erfindungsgemäße Gummilager weist gute Gebrauchseigenschaften mit zwei Dämpfungsmaxima in voneinander abweichenden Frequenzbereichen auf und zumindest einen Frequenzbereich mit niedriger dynamischer Federrate. Das erfindungsgemäße Gummilager ist einfach herstellbar und bietet gute Gebrauchseigenschaften während einer langen Gebrauchsdauer.

## Patentansprüche

1. Hydraulisch dämpfendes Gummilager, umfassend einen inneren Stützkörper (1) und einen den inneren Stützkörper (1) mit radialem Abstand umschließenden äußeren Stützkörper (2), die durch ein Federelement (3) aus gummielastischem Werkstoff aufeinander abgestützt sind und zumindest drei mit Dämpfungsflüssigkeit gefüllte Kammern (4, 5, 6) begrenzen, die zumindest teilweise durch gummielastische Blähwände begrenzt sind, wobei zumindest die erste und die zweite Kammer (4, 5) durch eine Verbindungsöffnung (7) flüssigkeitsleitend miteinander verbunden sind, wobei die dritte Kammer (6) durch membranartige Blähwände von der ersten und zweiten Kammer (4, 5) getrennt ist und wobei die dritte Kammer (6) derart zwischen der ersten und zweiten Kammer (4, 5) angeordnet ist, daß sie den inneren Stützkörper (1) zumindest teilweise umschließt, dadurch gekennzeichnet, daß die erste und die zweite Kammer (4, 5) auf einander gegenüberliegenden Seiten der Lagerachse (14) vorgesehen sind und die dritte Kammer (6) derart radial innerhalb der ersten und zweiten Kammer (4, 5) angeordnet ist, daß sie radial außenseitig durch die von dem inneren Stützkörper (1) radial beabstandeten, membranartigen Blähwände von der ersten und zweiten Kammer (4, 5) begrenzt ist.

2. Gummilager nach Anspruch 1, dadurch gekennzeichnet, daß die Blähwände der dritten Kammer (6) radial in die erste und/oder zweite Kammer (4, 5) hineinragende Anschlagpuffer (8, 9) aufweisen, die bei Extremauslenkungen der beiden Stützkörper (1, 2) relativ zueinander an den äußeren Stützkörper (2) anlegbar sind.

3. Gummilager nach Anspruch 2, dadurch gekennzeichnet, daß die Blähwände und die Anschlagpuffer (8, 9) einstückig ineinander übergehend ausgebildet sind.

4. Gummilager nach Anspruch 3, dadurch gekennzeichnet, daß die Anschlagpuffer (8, 9) im Bereich ihrer Anschlagfläche Vertiefungen (10) aufweisen und daß die Vertiefungen (10) bei Anschlagberührung der Anschlagpuffer (8, 9) mit dem äußeren Stützkörper (2) einen Hohlraum begrenzen.

5. Gummilager nach Anspruch 1 bis 4, dadurch gekennzeichnet, daß die erste und zweite Kammer (4, 5) jeweils in axialer Richtung beiderseits durch Blähwände (12) begrenzt sind.

6. Gummilager nach Anspruch 5, dadurch gekennzeichnet, daß die Blähwände (12) eine übereinstimmende Ausbauchungselastizität aufweisen.

7. Gummilager nach Anspruch 5, dadurch gekennzeichnet, daß die Blähwände der ersten Kammer (4) eine Gesamtausbauchungselastizität aufweisen, die von der Gesamtausbauchungselastizität der Blähwände der zweiten Kammer (5) abweicht.

8. Gummilager nach Anspruch 1 bis 7, dadurch gekennzeichnet, daß die dritte Kammer (6) nur in radialer Richtung durch Blähwände begrenzt und in axialer Richtung durch unnachgiebige Begrenzungswände verschlossen ist.

9. Gummilager nach Anspruch 1 bis 8, dadurch gekennzeichnet, daß nur die erste und zweite Kammer (4, 5) flüssigkeitsleitend miteinander verbunden sind.

10. Gummilager nach Anspruch 1 bis 9, dadurch gekennzeichnet, daß die Blähwände der dritten Kammer (6) auf ihrer dem inneren Stützkörper (1) zugewandten Innenfläche eine Oberflächenprofilierung aufweisen.

11. Gummilager nach Anspruch 1 bis 10, dadurch gekennzeichnet, daß der innere Stützkörper (1) und der den inneren Stützkörper (1) adhäsiv umgebende Federkörper (3) in axialer Richtung zweiteilig ausgeführt sind und daß die inneren Stützkörperteilabschnitte (1.1, 1.2) im Bereich ihrer axialen Berührungsflächen kraft und/oder formschlüssig miteinander verbunden sind.

12. Gummilager nach Anspruch 11, dadurch gekennzeichnet, daß als Verbindungselement (13) ein Klemmring zur Anwendung gelangt.

## Claims

1. A hydraulically damping rubber support comprising an inner supporting body (1) and an outer supporting body (2) surrounding the inner supporting body (1) with a radial clearance, which are supported upon one another by a spring element (3) made of rubber-elastic material and bound at least three chambers (4, 5, 6) filled with damping fluid, which are bounded at least in part by rubber-elastic expandable walls, at least the first and the second chamber (4, 5) being connected to one another in a manner which allows the transmission of fluid by a connecting opening (7), the third chamber (6) being separated from the first and second chamber (4, 5) by diaphragm-like expandable walls, and the third chamber (6) being arranged in such a way between the first and second chamber (4, 5) that it at least partially surrounds the inner supporting body (1), characterized in that the first and the second chamber (4, 5) are provided on opposite sides of the support axis (14), and the third chamber (6) is arranged radially to the inside of the first and second chamber (4, 5) in such a way that it is bounded radially to the outside by the diaphragm-like expandable walls of the first and second chamber (4, 5), which walls are at a radial distance from the inner supporting body (1).

2. A rubber support according to claim 1, characterized in that the expandable walls of the third chamber (6) have stop buffers (8, 9) which project radially into the first and/or second chamber (4, 5) and, in the event of extreme deflections of the two supporting bodies (1, 2) relative to one another, can be brought to rest on the outer supporting body (2).

3. A rubber support according to claim 2, characterized in that the expandable walls and the stop buffers (8, 9) are designed in such a way as to merge integrally into one another.

4. A rubber support according to claim 3, characterized in that the stop buffers (8, 9) have depressions (10) in the region of their stop faces and in that the depressions (10) bound a cavity when the stop buffers (8, 9) come into end-of-travel contact with the outer supporting body (2).

5. A rubber support according to any of claims 1 to 4, characterized in that the first and second chamber (4, 5) are each bounded at both ends in the axial direction by expandable walls (12).

6. A rubber support according to claim 5, characterized in that the expandable walls (12) have a corresponding bulging elasticity.

7. A rubber support according to claim 5, characterized in that the expandable walls of the first chamber (4) have a total bulging elasticity which differs from the total bulging elasticity of the expandable walls of the second chamber (5).

8. A rubber support according to any of claims 1 to 7, characterized in that the third chamber (6) is bounded by expandable walls only in the radial direction and is closed off by inflexible boundary walls in the axial direction.

9. A rubber support according to any of claims 1 to 8, characterized in that only the first and second chamber (4, 5) are connected to one another in a manner which allows the transmission of fluid.

10. A rubber support according to any of claims 1 to 9, characterized in that the expandable walls of the third chamber (6) have surface profiling on their inner surface, the surface facing the inner supporting body (1).

11. A rubber support according to any of claims 1 to 10, characterized in that the inner supporting body (1) and the spring body (3) adhesively surrounding the inner supporting body (1) are of two-part design in the axial direction and in that the inner supporting-body sections (1.1, 1.2) are connected to one another non-positively and/or positively in the region of their axial contact surfaces.

12. A rubber support according to claim 11, characterized in that a clamping ring is used as the connecting element (13).

## Revendications

1. Support élastique à amortissement hydraulique, comprenant un support intérieur (1) et un support extérieur (2) enfermant le support intérieur (1) avec une distance radiale, qui prennent appui l'un sur l'autre par un élément à ressort (3) en matière élastique et délimitent au moins trois chambres (4, 5, 6) remplies de liquide amortisseur, lesquelles sont au moins partiellement délimitées par des parois extensibles élastiques, étant précisé qu'au moins la première et la deuxième chambre (4, 5) sont reliées entre elles par une ouverture de liaison (7) de manière à assurer l'écoulement du liquide, que la troisième chambre (6) est séparée de la première et de la deuxième chambre (4, 5) par des parois extensibles du type membrane et que la troisième chambre (6) est disposée entre la première et la deuxième chambre (4, 5) de manière à enfermer le support intérieur (1) au moins partiellement, caractérisé en ce que la première et la deuxième chambre (4, 5) sont placées sur des côtés opposés de l'axe du palier (14) et que la troisième chambre (6) est disposée radialement à l'intérieur de la première et de la deuxième chambre (4,5), de manière à ce que ses côtés extérieurs soient limités radialement de la première et de la deuxième chambre (4, 5) par les parois extensibles du type membrane distancées radialement du support intérieur (1).

2. Support élastique selon la revendication 1, caractérisé en ce que les parois extensibles de la troisième chambre (6) comprennent des butoirs (8, 9) s'avançant radialement dans la première et/ou la deuxième chambre (4, 5), qui peuvent se mettre l'un par rapport à l'autre contre le support extérieur (2) en cas de déviation extrême des deux supports (1, 2).

3. Support élastique selon la revendication 2, caractérisé en ce que les parois extensibles et les butoirs (8, 9) sont conçus de manière à se confondre pour former une pièce.

4. Support élastique selon la revendication 3, caractérisé en ce que les butoirs (8, 9) comprennent au niveau de leur surface de butée des enfoncements (10), et en ce que les enfoncements (10) imitent une cavité, lorsque les butoirs entrent en contact avec le support extérieur (2).

5. Support élastique selon la revendication 1 à 4, caractérisé en ce que la première et la deuxième chambre (4, 5) sont limitées chacune dans le sens axial des deux côtés par des parois extensibles (12).

6. Support élastique selon la revendication 5, caractérisé en ce que les parois extensibles (12) présentent une élasticité convexe concordante.

7. Support élastique selon la revendication 5, caractérisé en ce que les parois extensibles de la première chambre (4) présentent une élasticité convexe totale qui est différente de l'élasticité convexe totale des parois extensibles de la deuxième chambre (5).

8. Support élastique selon la revendication 1 à 7, caractérisé en ce que la troisième chambre (6) n'est limitée que dans le sens radial par des parois extensibles et est fermée par des parois de limitation inflexibles dans le sens axial.

9. Support élastique selon la revendication 1 à 8, caractérisé en ce que uniquement la première et la deuxième chambre (4, 5) sont reliées entre elles de manière à assurer l'écoulement du liquide.

10. Support élastique selon la revendication 1 à 9, caractérisé en ce que les parois extensibles de la troisième chambre (6) comprennent sur leur face interne orientée vers le support intérieur (1) un profilage de surface.

11. Support élastique selon la revendication 1 à 10, caractérisé en ce que le support intérieur (1) et l'élément à ressort (3) enveloppant le support intérieur (1) de manière adhésive, sont réalisés dans le sens axial en deux pièces, et en ce que les tronçons (1.1, 1.2) du support intérieur, au niveau de leurs surfaces de contact axiales, sont reliés entre eux par adhérence et/ou engagement positif.

12. Support élastique selon la revendication 11, caractérisé en ce que l'on utilise comme élément de liaison un anneau de serrage.
